# EUROPEAN PATENT APPLICATION

(11) **EP 3 795 428 A1**
(43) Date of publication of application: **24.03.2021**
(21) Application number: 19306156.1
(22) Date of filing: 20.09.2019
(51) Int. Cl.: B60R 21/0136

(54) **STRUCTURAL DEFORMATION DETECTION SYSTEM AND METHOD**

(71) Applicant: Prophesee, 75012 Paris (FR)
(72) Inventor: BRAMBILLA, Manuele, 75020 PARIS (FR); BURNS, Geoffrey F, PARIS, 75006 (US); POSCH, Christoph, 2721 Bad Fischau (AT); VALENTE, Stéphane, 75002 PARIS (FR)
(74) Representative: Plasseraud IP

(57) **Abstract**

A structural deformation detection system, comprising: at least one camera (2), positioned to observe a portion of a structure, and generating data relating to the portion of the structure; and a processor (4), adapted to receive the data from the at least one camera and detect and track deformation of the portion of the structure.

## Description

The present invention relates to methods for detecting structural deformation and related systems.

### BACKGROUND

In engineering, structural deformation relates to warping, bending, twisting and springiness in structural components of an object. The object may be a moving object such as a vehicle or aircraft, or a static object such as various constructions including buildings, bridges, dams and tunnels. Since it is vital for the stability and the performance of the structures of the object, some techniques have been developed to detect and monitor the structural deformation. In the art, some techniques need to embed sensors on the structure inside the object. However, such a technique increases the cost and complexity of the structure, and its detection accuracy still has limits depending on the methods of the installation of the sensors.

This problem exists for many different objects, among which vehicles are of particular importance since the structural deformation detection is critical for vehicle safety systems.

As the number of vehicles is increasing day by day, accidents due to the collision are also increasing rapidly. Therefore, vehicle safety system has been developed to reduce the accidents and protect passengers and pedestrians.

Some vehicle safety systems, sometimes referred to as active safety systems, play a preventive role in mitigating crashes and accidents by providing advance warning or by providing the driver with additional assistance in steering/controlling the vehicle, including Head-Up Display (HUD), Anti-Lock Braking Systems (ABS), Electronic Stability Control (ESC), Tire Pressure Monitoring System (TPMS), Lane Departure Warning System (LDWS), Adaptive Cruise Control (ACC), Driver Monitoring System (DMS), Blind Spot Detection (BSD) and Night Vision System (NVS).

Other vehicle safety systems, sometimes referred to as passive safety systems, include airbags, seatbelts, whiplash protection systems, and play a role in limiting/containing the damage/injuries caused to driver, passengers and pedestrians in the event of a crash/accident.

Due to the complexity of vehicle accidents, the active safety system cannot sufficiently and timely prevent the collisions, the passive safety system always plays an important role of the last line of the safety defence. In particular, the use of airbags and seat belts is invaluable to save lives and prevent injuries in case of accidents. However, to maximize their effect and prevent injuries, they need to be activated only and timely in case of an actual car accident.

In the art, the detection of car accidents is currently done mainly through traditional crash sensors, which might be inaccurate in case of lateral or rear impacts or rollovers.

Those crash sensors are typically based on mechanical sensors such as air damped ball-in-tube sensor, as disclosed by US3974350, US4198864, US4284863, US4329549 and US4573706, or spring mass sensor, as disclosed by US4116132, US4167276), or electronic accelerometers, as disclosed by US5610817A. All these sensors work by measuring a sudden change in speed. However, such change in speed is not always a reliable way to detect a car accident, in particular such sensors do not provide enough information to be able to react properly. Because the change in speed might be due to other motions of the car, for example a rollover could be mistaken for a frontal collision. Moreover, Silva, A. F., et al. present in their article "Inner car smart flooring for monitoring chassis deformation." Sensors, 2009 IEEE, that the detail of information that such sensors can provide is typically very limited and require complex calibrations. This results in the impossibility to properly detect and analyze a crash, limiting the information that can be used to ensure the safety of the vehicle occupants.

Therefore, there is a need to improve the accuracy of the collision detection, so as to timely trigger the passive safety system and protect the driver and other occupants in the vehicle.

For other structures of objects, such as airplanes, machines, bridges undergoing deformations due to car and truck traffic, and buildings during earthquakes and high wind situations, it is also need to find a less complex and more accurate system to detect structural deformations and monitor structural health.

### SUMMARY

An object of the present invention is to provide a new structural deformation detection system and method, adapted to reliably and quickly detect structural deformation.The present invention proposes a structural deformation detection system, comprising:
at least one camera, positioned to observe a portion of the structure, and generating data relating to the portion of the structure; and
a processor, adapted to receive the data from the at least one camera and detect and track deformation of the portion of the structure.

With such a system, a reliable way is obtained to detect structural deformation.

For example, in the present invention, the structure belongs to a vehicle. The purpose of the present invention is to detect car accidents by means of monitoring the deformation of the car itself, and thus it is possible to reliably and quickly detect deformations that indicate a car accident.

In one embodiment, the portion of the structure includes at least one marker arranged to be observed by the at least one camera.

Alternatively, the at least one marker is a passive mark, for example a QR-code or an infrared-reflective marker.

Alternatively, the at least one marker is an active marker, for example a blinking or constant LED or a laser marker.

Furthermore, the data contains temporal signatures of the light emitted or reflected by the at least one marker, for example, including pseudo-random sequences, periods or duty cycles.

In another embodiment, the at least one camera is an event-based camera.

In addition, the at least one camera and at least one marker are both positioned in a trunk or motor compartment or cockpit of the vehicle.

In yet another embodiment, the processor is an on-board processor in a central car computer.

Another aspect of the present invention relates to a method of detecting structural deformation, comprising:
a calibration phase, comprising:
   generating initial data of a portion of a structure, by at least one camera, positioned to observe the portion of the structure; and
   receiving the initial data from the at least one camera and creating a calibration baseline; and
a subsequent monitoring phase, comprising:
   generating monitoring data of the portion of the structure, by the at least one camera; and
   receiving the monitoring data and comparing the monitoring data with the calibration baseline, so as to detect and track deformation of the portion of the structure.

For example, in the present method, the method is adapted for detecting a vehicle collision.

In one embodiment, at least one camera is arranged to observe at least one marker provided in the portion of the structure.

During the calibration phase, the method may further comprise:
producing intensity or color measurement or contrast change events in pixels of in a sensor plane of the at least one camera when the at least one camera observes the at least one marker, so as to generate the initial data;
analyzing and filtering the initial data, so as to keep data of pixels only relating to the marker; and
extracting first location data of the pixels relating to the marker from the initial data, and recording the first location data in a calibration baseline, such as a pixel map, a fitted geometric model, or a list of coordinates.

During the monitoring phase, the method may further comprise:
producing intensity or color measurement or contrast change events in pixels of in a sensor plane of the at least one camera when the at least one camera observes the at least one marker, so as to generate the monitoring data;
analyzing and filtering the monitoring data, so as to keep data of the pixels only relating to the marker;
extracting second location data of the pixels relating to the marker in the monitoring data, and, if necessary, recording the second location data, for example, in a current marker pixel map;
comparing the location data of the pixels in the second location data, for example in the current marker pixel map and in the calibration baseline, for example, in the form pixel map, so as to detect the deformation of the portion of the structure. For example,
if the difference of the calibration baseline and the second location data is larger than a tolerance limit, the deformation is detected and a collision signal can be generated accordingly.

In another embodiment, the initial data and the monitoring data comprise temporal signatures of the light emitted or reflected by the at least one marker, for example, for example, including pseudo-random sequences, periods or duty cycles.

Furthermore, the initial data and the monitoring data may be analysed and filtered by means of the temporal signatures.

The method according to the present invention may further comprise activing safety features of the vehicle after receiving the collision signal.

In yet another embodiment, the calibration phase is executed when the vehicle starts.

In addition, according to the method of the present invention the at least one camera is positioned in a trunk or motor compartment or cockpit of the vehicle, and the method further comprises generating a collision signal in response to a condition revealed by the comparison of the monitoring data with the calibration baseline, in order to activate safety features of the vehicle. The present invention discloses a reliable way to detect car accidents by means of monitoring the deformation of the car itself by using cameras and specialized markers when necessary. In this regard, the present invention may achieve accurate and fast detection of car accidents and impacts.

The accuracy of the detection can be significantly improved, so as to prevent, for example, unwanted triggering of airbags or seatbelts. In addition, the speed of the detection can also be substantively improved, so as to quickly react and deploy safety measures.

Moreover, the flexibility of the deployment of the cameras can also make the system simple and versatile for the occupant monitoring, intrusion detection or localization and mapping.

With these advantages, more precise and detailed the information about the impact in terms of speed, position and dynamics can be obtained, and the passive safety system can react more quickly and increase the safety of the vehicle occupants.

Alternatively, the detection system and method of the present invention are also adapted for structures of other objects, such as airplanes, machines, bridges, buildings and etc., so as to detect their structural deformations and monitor the structural health.

Additional advantages, objects, and features of the invention will be set forth in part in the description which follows and in part will become apparent to those having ordinary skill in the art upon examination of the following or may be learned from practice of the invention. The objective and other advantages of the invention may be realized and attained by the structure particularly pointed out in the written description and claims hereof as well as the appended drawings.

### BRIEF DESCRIPTION OF THE DRAWINGS

Other features and advantages of the present invention will appear in the description hereinafter, in reference to the appended drawings, where:
figure 1 illustrates an exemplary system according to a first embodiment of the invention;
figure 2 illustrates an exemplary system according to a second embodiment of the invention;
figure 3 illustrates an exemplary system according to a third embodiment of the invention;
figure 4a is a flowchart of an illustrative calibration phase of a method according to the invention;
figure 4b is a flowchart of an illustrative monitoring phase of a method according to the invention;
figure 5a to 5c show temporal signatures of the markers observed by the camera.

### DESCRIPTION OF EMBODIMENTS

Reference will now be made to embodiments of the present invention, examples of which are illustrated in the accompanying drawings. Wherever possible, the same reference numbers will be used throughout the drawings to refer to the same or like parts.

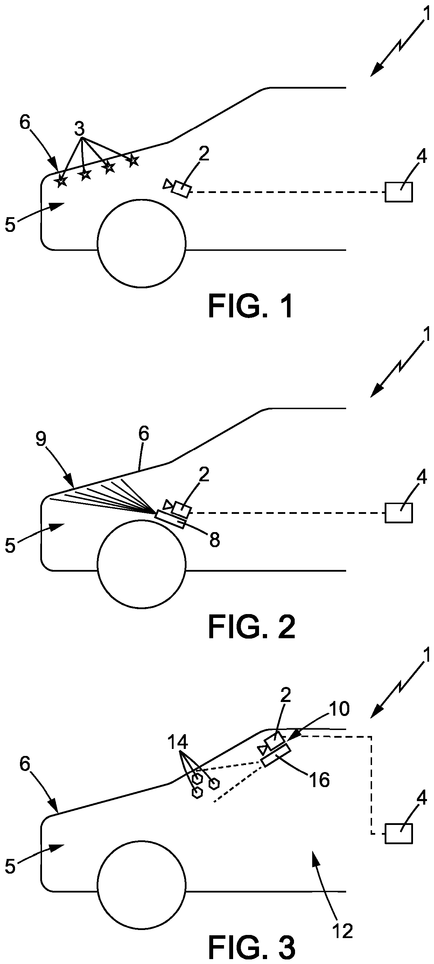

Figure 1 illustrates the overall setup of a vehicle collision detection system forming a first embodiment of the invention.

In the system in figure 1, a camera 2 is placed in the engine compartment 5 of the vehicle 1. The camera 2 observes the motor hood 6 of the vehicle. It is also possible to place the camera in the trunk or cockpit of the vehicle, as long as it may observe a portion of the vehicle which deforms during a collision. In addition, the camera shall be substantially and relatively stable in relation with the portion on the vehicle to be observed when there is no collision, which means during normal operation, the camera shall be rigidly attached to the vehicle and observe the portion on the vehicle that is relatively static with the camera.

In the context of the present invention, the camera 2 can be a high speed camera which is a device capable of capturing moving images with exposures of less than 1 millisecond or frame rates in excess of 250 frames per second.

Preferably, the camera 2 is an event-based light sensor which comprises an event-based asynchronous vision sensor placed facing the portion on the vehicle to be observed and receiving the light flow of the scene comprising that portion of the vehicle through optics for acquisition comprising one or several lenses, which provides a field of view depending on the optical characteristics of the lenses. The sensor is placed in the image plane of the optics for acquisition. It comprises an array of sensing elements, such as photosensitive elements, organized into a matrix of pixels. Each sensing element corresponding to a pixel produces successive events signal depending on variations of light in the scene.

The event-based light sensor comprises a sensor processor which processes the event signal originating from the sensor, i.e. the sequences of events received asynchronously from the various pixels, and then forms and outputs event-based data. A hardware implementation of the sensor processor using specialized logic circuits (ASIC, FPGA, ...) or chip coupled with the sensor is also possible.

In particular, the asynchronous sensor carries out an acquisition to output a signal which, for each pixel, may be in the form of a succession of instants tₖ (k = 0, 1, 2, ...) at which an activation threshold Q is reached. Each time this luminance increases by a quantity equal to the activation threshold Q starting from what it was in time tₖ, a new instant tₖ₊₁ is identified and a spike is emitted at this instant tₖ₊₁. Symmetrically, each time that the luminance observed by the pixel decreases by the quantity Q starting from what it was in time tₖ, a new instant tₖ₊₁ is identified and a spike is emitted at this instant tₖ₊₁. The signal sequence for the pixel includes a succession of spikes positioned over time at instants tₖ depending on the light profile for the pixel. Without limitation, the output of the sensor is then in the form of an address-event representation (AER). In addition, the signal sequence typically includes a luminance attribute corresponding to a variation of incident light.

The activation threshold Q can be fixed or can be adapted as a function of the luminance. For example, the threshold can be compared to the variations in the logarithm of the luminance for generating events when exceeded. Alternatively, different thresholds can be respectively set for increasing luminance activations and for decreasing luminance activations.

By way of example, the sensor can be a dynamic vision sensor (DVS) of the type described in "A 128×128 120 dB 15 µs Latency Asynchronous Temporal Contrast Vision Sensor", P. Lichtsteiner, et al., IEEE Journal of Solid-State Circuits, Vol. 43, No. 2, February 2008, pp. 566-576, or in patent application US 2008/0135731 A1. The dynamics of a retina (minimum duration between the action potentials) can be approached with a DVS of this type. The dynamic behaviour surpasses that of a conventional video camera that has a realistic sampling frequency. When a DVS is used as the event-based sensor, data pertaining to an event originating from a pixel include the address of the pixel, a time of occurrence of the event and a luminance attribute corresponding to a polarity of the event, e.g. +1 if the luminance increases and -1 if the luminance decreases.

Another example of an asynchronous sensor that can be used advantageously in the context of this invention is the asynchronous time-based image sensor (ATIS) of which a description is given in the article "A QVGA 143 dB Dynamic Range Frame-Free PWM Image Sensor With Lossless Pixel-Level Video Compression and Time-Domain CDS", C. Posch, et al., IEEE Journal of Solid-State Circuits, Vol. 46, No. 1, January 2011, pp. 259-275. When an ATIS is used as the event-based sensor 10, data pertaining to an event originating from a pixel include the address of the pixel, a time of occurrence of the event and a luminance attribute corresponding to an estimated value of the absolute luminance.

The system may comprise at least one special marker 3 on the motor hood 6, such as LEDs in figure 1, so that the camera 2 can monitor the hood by detecting and tracking the movement of the marker 3. The LED marker 3 can be operated in a blinking mode, but the invention is not limited to that. The presence of the special marker 3 can facilitate the collision detection, but it is not a strict requirement, as the detection can also be performed without any special marker.

In order to better monitor the hood 6 or the marker 3 thereon, several cameras can be placed to observe the portion of the vehicle from different angles, so as to increase the robustness of the system and add depth information using stereo systems. Conversely, one camera can potentially monitor multiple markers to reduce the number of cameras needed.

In figure 1, the camera 2 is also connected with a processor 4 which receives the data generated by the camera 2 and processes the data so as to detect and track deformation of the observed portion, e.g. the hood 6, of the vehicle 1. The processor 4 is for example located on the centralized car computer or ECU (electronic control unit), which is an embedded system in vehicle that controls systems including active and passive safety systems in the vehicle.

As mentioned above, the special marker 3 is used to facilitate the observation of the deformation of the hood 4 when collision happens. In addition to the LEDs as markers in figure 1, figures 2 and 3 show second and third embodiments of the system with different types of markers and location of the camera.

In figure 2, a laser projector 8 is placed in motor compartment 5 with the camera 2. The laser projector 8 projects a point or a pattern 9 on the motor hood 6 to monitor. Any movement of the observed structure or of the laser projector can be monitored by the camera 2 to detect deformations.

In figure 3, a camera 2 is placed on the rear-view mirror 10 in the cockpit 12, monitoring a front portion of the cockpit 12. Multiple passive markers, such as infrared-reflective markers 14, are placed in the front portion of the cockpit 12. An infrared light source 16 is arranged with the camera 2 and is used to illuminate these markers 14 to be able to see them even in darkness. Movements in the position of the markers 14 are tracked to monitor deformations.

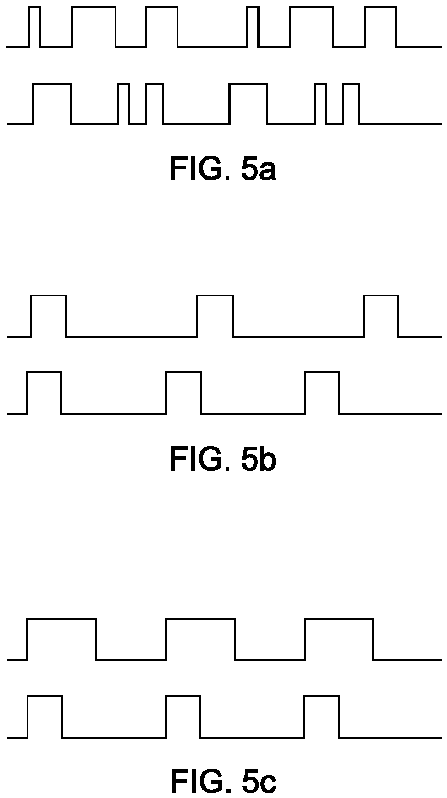

The markers 3, 9 and 14 emit or reflect lights with temporal characteristics, including a pre-defined frequency, a specific duty cycle, or a pseudo-random sequence of illumination which is fast enough to be invisible to the human eye, as shown in figures 5a to 5c. In particular, figure 5a shows two different pseudo random sequences, figure 5b shows two periodic sequences with different periods, and figure 5c shows two sequences with different duty cycles.

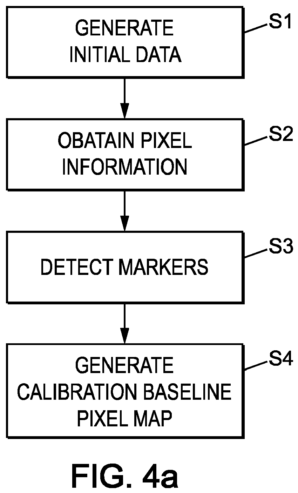

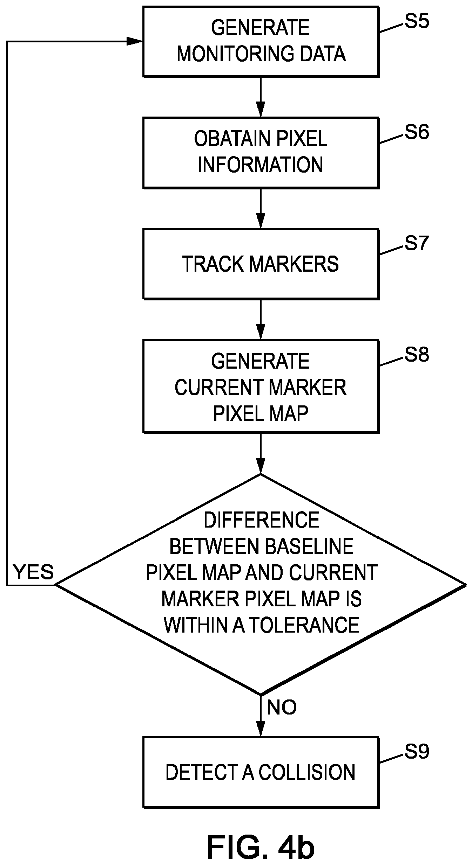

Referring to Figures 4a and 4b, we discuss hereinafter a method for detecting vehicle collision by means of the system mentioned above.

In particular, the method can be split into two phases: a calibration phase, as shown in figure 4a and a monitoring phase, as shown in figure 4b.

In the calibration phase, which may be carried out every time the vehicle engine is started, the markers or a portion of car structure is observed by the camera and is recorded over a period of time, the markers positions or car structure is extracted, and a calibration baseline is created.

The goal of this calibration phase is to record the (x, y) location on the sensor of the markers, isolating the markers from other pixel intensities or contrast changes of the environment. The point of having this calibration when the car engine is started, as opposed to performing it in a factory, is to adapt to the car structural deformations due to material aging or past accidents, if any.

In more details, by referring to figure 4a, a calibration method can proceed as follows.

In the beginning at step S1, after a vehicle starts, the camera observes the portion of the vehicle, for example the above-mentioned special active or passive markers on the portion of the vehicle, during a short period. The portion is well selected, as it may significantly deform during a vehicle collision. Then the camera generates initial data. When the camera is a high-speed frame-based camera, the initial data contain color or infrared image of the markers, which produces intensity or color measurements in pixels. When the camera is an event-based camera, the initial data contain contrast change events in sensing elements in responding to the presence of the markers, after the active markers begin to emit light or the passive markers begin to reflect light.

Then, pixel information contained in the generated initial data of image or change events is obtained at step S2, and analysed and filtered per pixel at step S3 to keep only the ones that correspond to the active or passive markers, so as to detect the markers.

This analysis is conducted by discriminating pixels in the image from a frame-based camera corresponding to other light-sources or other objects, such as QR codes, or events from an event-based camera in response to other light-sources or moving objects. For example, by comparing with the known temporal characteristics of the active/passive markers, such as the ones shown in figures 5a to 5c, pixels have different temporal characteristics other than the one of the markers will be discriminated. Figure 5a shows that the temporal characteristics may contain different pseudo random sequences. Figure 5b shows that the temporal characteristics may contain sequences with different periods. Figure 5c shows that the temporal characteristics may contain two sequences with different duty cycles.

Accordingly, when the pixel information represents flickers only at a pre-defined frequency, exhibits a specific duty cycle, or corresponds to a pseudo-random sequence of illumination, which is fast enough to be invisible to the human eye, the information of these pixels or the sensing elements is kept for the next step of detecting markers.

Therefore, at step S3, based on the information obtained and analysed at step S2, the marker is detected, and a first location data of the pixels relating to the marker on the sensor plane of the camera, for example the coordinates of n pixels (x1₀, y1₀), (x2₀, y1₀), ..., (xn₀, yn₀) of the marker, are recorded in a 2D pixel map at step S4, so as to create a calibration baseline pixel map.

Afterwards, in the following monitoring phase, as shown in figure 4b, the camera continues observing the marker arranged on the vehicle and generates monitoring data of the marker at step S5, which is similar to step S1 in the calibration phase. This means when the camera is a high-speed frame-based camera, the monitoring data also contain color or infrared image of the markers, which produces intensity or color measurements in pixels. When the camera is an event-based camera, the monitoring data contain contrast change events in sensing elements in responding to the relative movement of the marker..

Then, pixel information contained in the generated monitoring data of image or change events is obtained at step S6, and analysed and filtered per pixel at step S7 to keep only the ones that correspond to the active or passive markers, so as to track the marker.

Similarly, this analysis can also be conducted by discriminating pixels in the image from a frame-based camera corresponding to other light-sources or other objects, such as QR codes, or events from an event-based camera in response to other light-sources or moving objects. For example, by comparing with the known temporal characteristics of the active/passive markers, such as the ones shown in figures 5a to 5c, pixels have different temporal characteristics other than the one of the markers will be discriminated.

Therefore, at step S7, based on the information obtained and analysed at step S6, the marker is tracked, and a second location data of the pixels or sensing elements of the marker on the sensor plane of the camera, for example the coordinates of m pixels (x1ₛ, y1ₛ), (x2ₛ, y2ₛ), ..., (xmₛ, ymₛ) of the marker, are recorded in another 2D pixel map at step S8, so as to create a current marker 2D pixel map. Alternatively, it is not necessary to record the second location data in a second pixel map, and a comparison with the baseline can be performed as soon as step S8 delivers the second location data.

Next, at step S8, the second location data is compared with the first location data, i.e. comparing the location of the pixels in current marker pixel map and in the calibration baseline pixel map, so as to find the difference of the calibration baseline pixel map and the current marker pixel map.

If the difference is within a tolerance limit, the camera continues observing and tracking the marker by repeatedly performing steps S5 to S7.

If the difference is not within a tolerance limit, a vehicle collision is detected at step S9.

Several tolerance criteria can be used. One example of tolerance criterion is the current marker pixel map has less than X% of the number of pixels in the calibration baseline pixel map, i.e. m/n<X%, and the maps overlap by less than X% of their surface, a collision is detected (in an example X%=95%). The first condition ensures that the markers are visible, the second one ensures that they moved in the field of view of the camera.

If the markers are a set of LEDs as shown in figure 1, the tolerance criterion may be the number of detected LEDs is the same one as the number observed during calibration, and the distances between the LEDs are below 2 pixels from their position during the calibration.

Optionally, if one or more markers disappears from the view of the camera, due to an object or occupant in the vehicle car obscuring them, the system may ignore such disappearance, and avoid triggering the safety system.

Additionally, the new position of the tracked marker can be used to analyse the speed and direction of the deformation, so as to detect the precise type of the collision, such as front, lateral or rear impacts, or rollovers.

In addition, when a deformation or collision is detected, a collision signal is sent to the centralized car computer or ECU (electronic control unit) for triggering passive safety system, including pre-tightening of the seat belts of the driver and passengers, and/or triggering of the air-bags, so as to protect the vehicle occupants.

The above-described method may be implemented by the processor 4 using program instructions recorded in non-transitory computer-readable media to implement various operations which may be performed by a computer. The media may also include, alone or in combination with the program instructions, data files, data structures, and the like. The program instructions recorded on the media may be those specially designed and constructed for the purposes of the illustrative embodiments, or they may be of the well-known kind and available to those having skill in the computer software arts. Examples of non-transitory computer-readable media include magnetic media such as hard disks, floppy disks, and magnetic tape; optical media such as CD ROM discs and DVDs; magneto-optical media such as optical discs; and hardware devices that are specially configured to store and perform program instructions, such as read-only memory (ROM), random access memory (RAM), flash memory, and the like. Examples of program instructions include both machine code, such as code produced by a compiler, and files containing higher level code that may be executed by the computer using an interpreter. The described hardware devices may be configured to act as one.

With the arrangement of the present invention, it is possible to provide a more accurate and flexible collision system and method. With camera arranged according to the present invention, it is possible to correctly discriminate between different kinds of impacts. Many false positives may be avoided. In the meantime, it is also able to provide information about the direction, speed and dynamic of the impact. For example, the use of multiple cameras or markers can further increase the quality of the available information. In addition, the employed cameras can also be used also for other goals, such as occupant monitoring, intrusion detection or localization and mapping.

The embodiments described hereinabove are illustrations of this invention. Various modifications can be made to them without leaving the scope of the invention which stems from the annexed claims. For example, the present invention can also be used in the structural deformation detection and structural health monitoring in the following contexts:
Airplanes (cabin and wings);
Machines;
Bridges undergoing deformations due to car and truck traffic;
Buildings during earthquakes and high wind situations,
etc.

## Claims

1. A structural deformation detection system, comprising:
at least one camera (2), positioned to observe a portion of a structure, and generating data relating to the portion of the structure; and
a processor (4), adapted to receive the data from the at least one camera and detect and track deformation of the portion of the structure.

2. The structural deformation detection system of claim 1, wherein the portion of the structure includes at least one marker (3, 9, 14) arranged to be observed by the at least one camera.

3. The structural deformation detection system of claim 2, wherein at least one marker comprises a passive mark (9, 14).

4. The structural deformation detection system of any one of claims 2 and 3, wherein the at least one marker comprises an active marker (3).

5. The structural deformation detection system of any one of claims 2 to 4, wherein the data contains temporal signatures of the light emitted or reflected by the at least one marker (3, 9, 14).

6. The structural deformation detection system of any one of the preceding claims, wherein the at least one camera (2) comprises an event-based camera.

7. The structural deformation detection system of any one of claims 2 to 6, wherein the structure belongs to a vehicle, and the at least one camera (2) and at least one marker (3, 9, 14) are both positioned in a trunk or motor compartment (5) or cockpit (12) of the vehicle (1).

8. The structural deformation detection system of claim 7, wherein the processor (4) comprises an on-board processor in a central computer of the vehicle.

9. A method of detecting structural deformation, comprising:
a calibration phase, comprising:
generating initial data of a portion of a structure, by at least one camera (4), positioned to observe the portion of the structure; and
receiving the initial data from the at least one camera and creating a calibration baseline; and
a subsequent monitoring phase, comprising:
generating monitoring data of the portion of the structure, by the at least one camera; and
receiving the monitoring data and comparing the monitoring data with the calibration baseline, so as to detect and track deformation of the portion of the structure.

10. The method of claim 9, wherein the at least one camera (4) is arranged to observe at least one marker (3, 9, 14) provided in the portion of the structure.

11. The method of claim 10, further comprising, during the calibration phase:
producing intensity or color measurement or contrast change events in pixels of in a sensor plane of the at least one camera (4) when the at least one camera observes the at least one marker (3, 9, 14), so as to generate the initial data;
analyzing and filtering the initial data, so as to keep data of pixels only relating to the marker; and
extracting first location data of the pixels relating to the marker from the initial data, and recording the first location data in a calibration baseline.

12. The method of claim 11, further comprising, during the monitoring phase:
producing intensity or color measurement or contrast change events in pixels of in a sensor plane of the at least one camera (4) when the at least one camera observes the at least one marker (3, 9, 14), so as to generate the monitoring data;
analyzing and filtering the monitoring data, so as to keep data of the pixels only relating to the marker;
extracting second location data of the pixels relating to the marker in the monitoring data;
comparing the location data of the pixels in the second location data and in the calibration baseline to detect the deformation of the portion of the structure.

13. The method of any one of claims 11 and 12, wherein the initial data and the monitoring data comprise temporal signatures of light emitted or reflected by the at least one marker (3, 9, 14), and wherein the initial data and the monitoring data are analysed and filtered by means of the temporal signatures.

14. The method of any one of claims 9 to 13, wherein the structure belongs to a vehicle, and the at least one camera (2) is positioned in a trunk or motor compartment (5) or cockpit (12) of the vehicle (1), the method further comprising generating a collision signal in response to a condition revealed by the comparison of the monitoring data with the calibration baseline, in order to activate safety features of the vehicle (1).

15. The method of claim 14, wherein the calibration phase is executed when the vehicle starts.
